# EUROPÄISCHE PATENTSCHRIFT

(11) **EP 4 440 907 B1**
(45) Veröffentlichungstag und Bekanntmachung des Hinweises auf die Patenterteilung: **04.06.2025**
(21) Anmeldenummer: 23703780.9
(22) Anmeldetag: 06.02.2023
(51) Int. Cl.: B62D 21/11, B60K 5/12, B60K 1/00

(54) **HILFSRAHMEN FÜR EIN FAHRZEUG**
AUXILIARY FRAME FOR A VEHICLE
CADRE AUXILIAIRE POUR UN VÉHICULE

(30) Priorität: 11.02.2022 DE 102022103312
(43) Veröffentlichungstag der Anmeldung: 09.10.2024
(73) Patentinhaber: AUDI AG, 85057 Ingolstadt (DE)
(72) Erfinder: BUJAK, Marek, 91809 Wellheim (DE); EICKSTÄDT, Jörg, 85080 Gaimersheim (DE); MOHRLOCK, Dominik, 85114 Buxheim (DE); RUGIES, Stefan, 85057 Ingolstadt (DE); WEBER, Andreas, 85055 Ingolstadt (DE)
(74) Vertreter: Bierschneider, Walter
(86) Internationale Anmeldenummer: PCT/EP2023/052863
(87) Internationale Veröffentlichungsnummer: WO 2023/152090

(56) Entgegenhaltungen:
- EP-A2- 1 035 003
- CN-A- 106 697 054
- CN-B- 102 114 763
- CN-U- 201 941 845
- CN-U- 203 819 342
- DE-A1- 102012 103 125
- DE-A1- 102018 219 905
- JP-A- H02 283 577
- JP-A- H03 276 821
- KR-B1- 101 498 827

## Beschreibung

Die Erfindung betrifft einen Hilfsrahmen für ein Fahrzeug nach dem Oberbegriff der unabhängigen Ansprüche 1, 3 und 6.

Bei einer elektrifizierten Fahrzeugachse für ein zweispuriges Fahrzeug kann das Antriebsaggregat aus einer Elektromaschine und einem Getriebe bestehen, über das die Elektromaschine auf Flanschwellen abtreibt, die zu den Fahrzeugrädern führen. Das Antriebsaggregat ist in einer Drei- oder Vierpunktlagerung auf einem Hilfsrahmen abgestützt. Dieser ist wiederum über Hilfsrahmenlager an der Fahrzeugkarosserie montiert.

In einer gattungsgemäßen Antriebsvorrichtung ist das Antriebsaggregat über zumindest eine Aggregatestütze an einem Längsträger oder Querträger eines Hilfsrahmens abgestützt. Der Längs- oder Querträger ist als Hohlträger ausgeführt, der einen Hohlraum begrenzt, der im Querschnitt von einer umlaufenden Hohlträgerwandung geschlossen ist.

Im Stand der Technik sind an einem solchen Hilfsrahmen als separate Bauteile Lagerkonsolen befestigt, an die die Aggregatestütze anbindbar ist. Eine solche Anbindungsart führt im Bereich der Fahrzeugachse zu einer hohen Packagedichte, bei der die Konsolen den zur Verfügung stehenden Bauraum für Antriebsaggregat einschränken, sowie zu einem Bauteilaufwand beim Zusammenbau der Fahrzeugachse. Zudem sind separate Werkzeuge, zusätzliche Fertigungsanlagen sowie Fertigungszeit erforderlich, um die Konsolen am Hilfsrahmen zu verschweißen.

Die Konsolen können außerdem die Dauerfestigkeit des Hilfsrahmen schwächen. Ferner muss die Lage der Konsolen unter Umständen so gewählt werden, dass eine separate Demontage des Antriebsaggregates nicht mehr möglich ist.

Aus der DE 102 35 110 A1 ist ein Hilfsrahmen für Kraftfahrzeuge bekannt. Aus der DE 10 2013 007 473 A1 ist eine Aufhängungsvorrichtung für Antriebsaggregate von Kraftfahrzeugen bekannt. Aus der DE 10 2019 124 348 A1 ist eine Lagerungsanordnung einer Komponente an einem Achsträger für ein Fahrzeug bekannt. Weiterhin ist auch aus der EP 1 035 003 A2 ein Hilfsrahmen nach den Präambeln der Ansprüche 1, 3 und 6 bekannt.

Die Aufgabe der Erfindung besteht darin, einen Hilfsrahmen für ein Fahrzeug bereitzustellen, mittels in baulich einfacher Weise die Packagedichte sowie der Bauteilaufwand beim Zusammenbau des Hilfsrahmens reduzierbar ist.

Die Aufgabe ist durch die Merkmale der kennzeichnenden Teile der Ansprüche 1, 3 und 6 gelöst. Bevorzugte Weiterbildungen der Erfindung sind in den Unteransprüchen offenbart.

Die Erfindung geht von einem Hilfsrahmen für ein Fahrzeug aus, der eine Aggregatelagerung aufweist. Bei der Aggregatelagerung ist eine Aggregatestütze an einem Aggregatelager am Hilfsrahmen um eine Lagerachse schwenkbar angelenkt. Das Aggregatelager ist axial beidseitig an jeweils einem Konsolenflügel einer Lagerkonsole des Hilfsrahmens befestigt. Gemäß des Anspruches 1 ist das Aggregatelager bauraumgünstig in einem Inneneckbereich des Hilfsrahmens angeordnet, an dem ein erster Hilfsrahmenträger und ein zweiter Hilfsrahmenträger zusammenlaufen. Einer der Konsolenflügel ist unmittelbar durch eine rahmeninnere Seite des ersten Hilfsrahmenträgers ausgebildet. Der andere Konsolenflügel kann dagegen nicht unmittelbar im Hilfsrahmenträger integriert sein, sondern vielmehr als ein separates Konsolenflügel-Bauteil ausgebildet sein, das am zweiten Hilfsrahmenträger angebunden ist. Auf diese Weise wird die Lagerkonsole mit reduziertem Bauraumbedarf sowie mit reduziertem Bauteilaufwand bereitgestellt.

Das separate Konsolenflügel-Bauteil, das am zweiten Hilfsrahmenträger angebunden ist, kann über einen Lager-Zwischenraum vom ersten Hilfsrahmenträger beabstandet sein. Im Lager-Zwischenraum ist das Aggregatelager positioniert.

In einer bevorzugten Ausführungsvariante kann der erste Hilfsrahmenträger ein Hilfsrahmenquerträger sein, während der zweite Hilfsrahmenträger ein Hilfsrahmenlängsträger ist. Der Hilfsrahmenquerträger und der Hilfsrahmenlängsträger laufen an einem Eckknoten des Hilfsrahmens zusammen. Im Inneneckbereich dieses Eckknotens befindet sich das Aggregatelager.

In einer technischen Umsetzung kann der erste Hilfsrahmenträger, in dem ein Konsolenflügel unmittelbar integriert ist, als ein Hohlträger ausgeführt sein, der einen Hohlraum begrenzt. Der Hohlraum ist im Hohlträgerquerschnitt betrachtet mittels einer Hohlträgerwandung geschlossen. Zudem ist der erste Hilfsrahmenträger an der rahmenäußeren Seite der Hohlträgerwandung eine Zugangsöffnung aufweisen, über die das Aggregatelager montierbar bzw. demontierbar.

Die Lagerachse des Aggregatelagers, um die die Aggregatestütze schwenkbar angelenkt ist, kann von einem Lagerbolzen definiert sein. Dieser kann axial beidseitig des Aggregatelagers im jeweiligen Konsolenflügel der Lagerkonsole gelagert sein. Im Hinblick auf eine kompakte sowie bauteilsteife Konsolenflügelgeometrie ist der Konsolenflügel gemäß einem weiteren Erfindungsaspekt als ein U-Profilteil ausgebildet. Das U-Profilteil weist eine Basiswand, in der der Lagerbolzen gelagert ist, und davon abgewinkelte Stützschenkel auf, die die Basiswand gegenüber dem Hilfsrahmen abstützen. Die beiden Stützschenkel ragen von der Basiswand axial nach außen ab. Der Konsolenflügel ist an seiner Basiswand-Bodenkante und/oder an seiner Stützschenkel-Bodenkante am Hilfsrahmen angebunden. Die Anbindung erfolgt durch Schweißen.

Im Hinblick auf eine kompakte sowie bauteilsteife Ausführung ist die Basiswand dreieckförmig ausgebildet, und zwar mit Basiswand-Randkanten, die ausgehend von der Basiswand-Bodenkante an einem bevorzugt gerundeten Basiswand-Scheitel dreieckförmig zusammenlaufen. Im Bereich des Basiswand-Scheitels ist eine Lageröffnung für den Lagerbolzen ausgebildet.

In einer konkreten Ausführungsvariante kann der Kantenverlauf der jeweiligen Basiswand-Randkante unterteilt sein, und zwar in eine Übergangskante, an der der jeweilige Stützschenkel von der Basiswand abgewinkelt ist, und in eine freie Randkante, die sich bis zum Basiswand-Scheitel erstreckt.

Eine verbindungssteife Anbindung des Konsolenflügels am Hilfsrahmen ist von besonderer Bedeutung. Vor diesem Hintergrund kann zumindest einer der Stützschenkel des Konsolenflügels mit einer Lasche verlängert sein. Diese kann die Basiswand-Bodenkante des Konsolenflügels mit einem Überstand überragen. Die Basiswand-Bodenkante kann dabei an einer Hilfsrahmenseite angebunden sein, während die Stützschenkel-Lasche an einer unterschiedlich orientierten, weiteren Hilfsrahmenseite angebunden sein kann. Beispielhaft ist die Basiswand-Bodenkante an einer Rahmeninnenseite angebunden, während die Stützschenkel-Lasche an einer Rahmenunterseite angebunden ist.

Bei der oben beschriebenen Dreieck-Geometrie der Lagerkonsole sind die beiden Stützschenkel zueinander nicht parallel ausgerichtet, sondern laufen diese vielmehr in Richtung Basiswand-Scheitel aufeinander zu. Auf diese Weise ergibt sich eine besonders kompakte sowie bauteilsteife Konsolenflügel-Geometrie. Im Hinblick auf eine einfache Fertigung ist es bevorzugt, wenn der Konsolenflügel als ein Blech-Umformteil realisiert ist, bei dem zunächst ein flächiger Blech-Rohling bereitgestellt wird, der in einer Schneidsowie Umformoperation zu dem Konsolenflügel umgeformt wird.

Gemäß einem weiteren Aspekt der Erfindung kann der Hilfsrahmenträger, das heißt ein Hilfsrahmenquerträger oder ein Hilfsrahmenlängsträger unter Querschnittsreduzierung mit einer muldenförmigen Montagevertiefung ausgebildet sein, in der die Konsolenflügel angeordnet sind. Auf diese Weise können auftretende Betriebskräfte von der Aggregatestütze über das Aggregatelager unter Ausnutzung der mit Hilfe der muldenförmigen Montagevertiefung gewonnenen Stabilität des jeweiligen Hilfsrahmenträgers bauteilstabil in Richtung Hilfsrahmen abgeleitet werden.

Der Hilfsrahmenträger ist dabei ein Hohlträger, der einen Hohlraum begrenzt, der im Hohlträgerquerschnitt betrachtet mittels einer Hohlträgerwandung geschlossen ist. In der geschlossenen Hohlträgerwandung ist die muldenförmige Montagevertiefung ausgebildet. Die Hohlträgerwandung weisst hat einen rechteckförmigen Querschnitt, bei dem eine obere horizontale Hohlträger-Deckwand und eine untere horizontale Hohlträger-Bodenwand an Übergangskanten mit vertikalen Hohlträger-Seitenwänden verbunden sind.

Die muldenförmige Montagevertiefung ist wie folgt positioniert: So ist der Konturverlauf einer der beiden Übergangskanten durch die muldenförmige Montagevertiefung unterbrochen. In diesem Fall geht ein Muldenboden der Montagevertiefung an einem Vertiefungsrand in die Seitenwand und in die Boden- oder Deckwand des Hilfsrahmenträgers über.

Auf diese Weise ist eine besonders bauteilsteife Abstützbasis der Lagerkonsole am Hilfsrahmen bereitgestellt. Die Verbindungsfestigkeit zwischen dem Konsolenflügel und dem Hilfsrahmenträger kann wie folgt weiter gesteigert werden: so kann die Basiswand-Bodenkante des Konsolenflügels am Muldenboden angebunden sein. Demgegenüber kann die Stützschenkel-Lasche den Muldenrand der Montagevertiefung übergreifen sowie an der Seitenwand und/oder an der Boden- bzw. Deckwand des Hohlträgers angebunden sein.

Nachfolgend sind Ausführungsbeispiele der Erfindung anhand der beigefügten Figuren beschrieben.

Es zeigen:
- Fig. 1: in einer Ansicht von oben einen Hilfsrahmen für ein Fahrzeug mit darauf montiertem Antriebsaggregat;
- Fig. 2 bis 4: jeweils Detailansichten der Aggregatelagerungen am Hilfsrahmen.

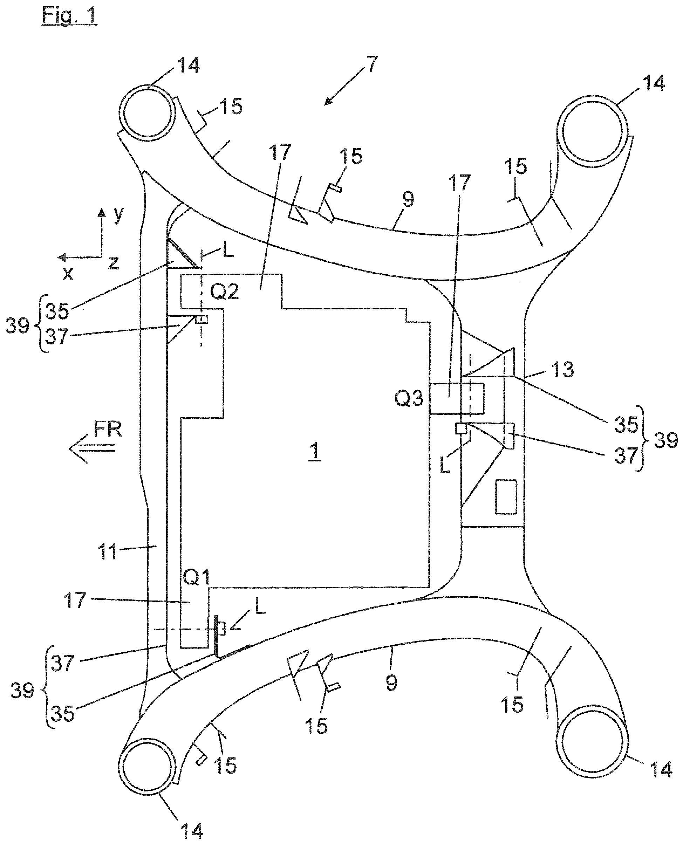

In der Figur 1 ist eine elektrifizierte Fahrzeugachse für ein zweispuriges Fahrzeug insoweit angedeutet, als es für das Verständnis der Erfindung erforderlich ist. Die Fahrzeugachse weist in der Figur 1 ein Antriebsaggregat 1 auf, das zum Beispiel aus einer Elektromaschine und einem Getriebe besteht. Das Antriebsaggregat 1 ist in einer Dreipunktlagerung an die Oberseite eines Hilfsrahmens 7 des Fahrzeugs angebunden. Der Hilfsrahmen 7 weist in der Figur 1 zwei seitliche Hilfsrahmenlängsträger 9 auf, die an vorderen und hinteren Eckknoten jeweils mit vorderen und hinteren Hilfsrahmenquerträgern 11, 13 verbunden. Gemäß der Figur 1 sind an den Eckbereichen des Hilfsrahmens 9 jeweils Lageraugen 14 für nicht gezeigte Hilfsrahmenlager ausgebildet, über die der Hilfsrahmen 7 an der Fahrzeugkarosserie montierbar ist. An den fahrzeugäußeren Seiten weisen die beiden Hilfsrahmenlängsträger 9 jeweils Anbindungsstellen 15 für nicht gezeigte Fahrwerkslenker auf.

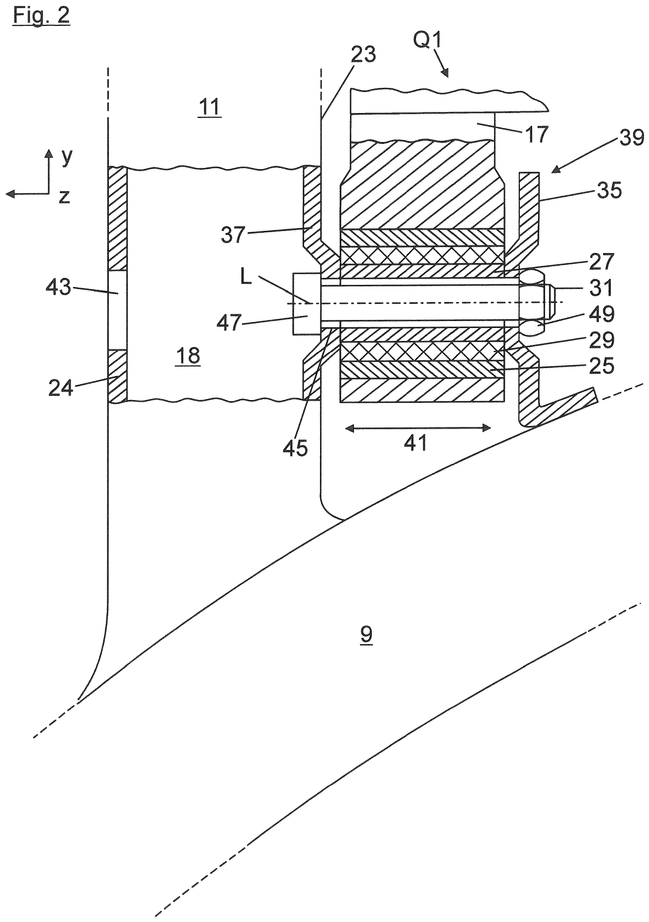

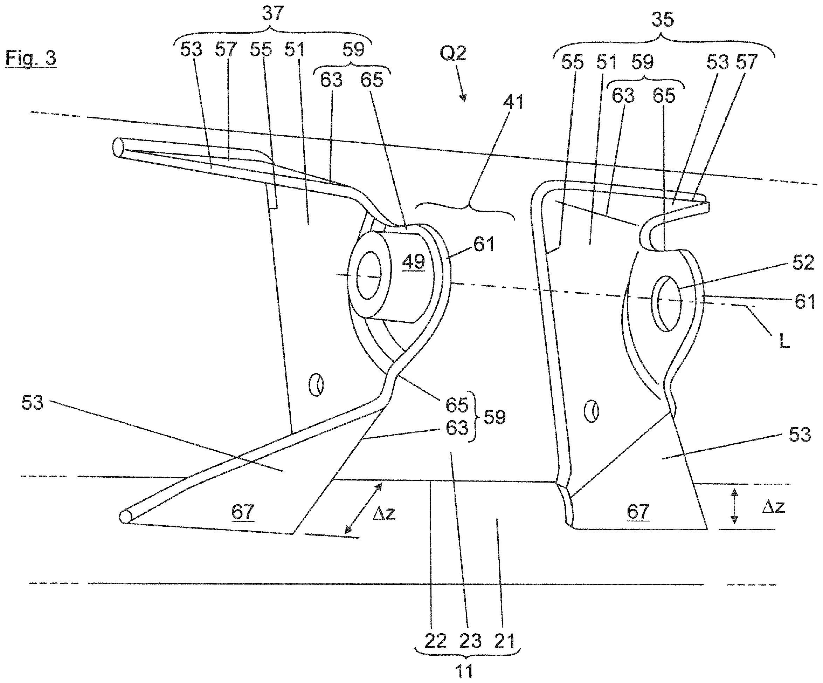

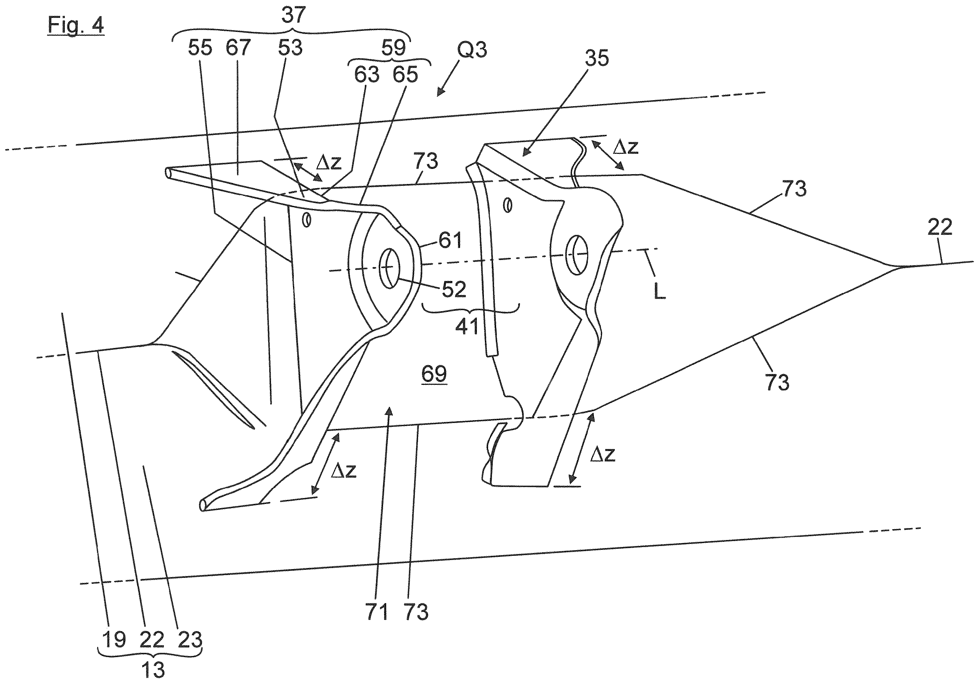

In der Figur 1 ist das Antriebsaggregat 1 an Aggregatestützen 17 des Antriebsaggregats 1 über zwei vordere Aggregatelager Q1, Q2 am vorderen Hilfsrahmenquerträger 11 montiert sowie über ein weiteres Aggregatelager Q3 am hinteren Hilfsrahmenquerträger 13 montiert. Die Hilfsrahmenquerträger 11, 13 sowie die beiden Hilfsrahmenlängsträger 9 sind jeweils als Hohlträger ausgebildet, die einen Hohlraum 18 (Figur 2) begrenzen. Dieser ist im Hohlträgerquerschnitt betrachtet von einer umlaufenden rechteckförmigen Hohlträgerwandung geschlossen. Die Hohlträgerwandung besteht gemäß den Figuren aus einer oberen, horizontalen Deckwand 19 (Figur 4) und einer unteren, horizontalen Bodenwand 21 (Figur 3), die an Übergangskanten 22 (Figuren 3 und 4) mit einer vertikalen inneren Seitenwand 23 (Figur 3) sowie einer vertikalen äußeren Seitenwänden 24 (Figur 2) verbunden sind.

Jedes der Aggregatelager Q1, Q2, Q3 ist als ein Gummi-Metall-Hülsenlager ausgebildet, das im Detail lediglich in der Figur 2 gezeigt ist. Demnach besteht das Gummi-Metall-Hülsenlager aus einer radial äußeren Außenhülse 25 und einem radial inneren, hülsenförmigen Lagerkern 27, zwischen denen ein schwingungsdämpfender Elastomerkörper 29 angeordnet ist. Durch den Lagerkern 27 der Aggregatelager Q1, Q2, Q3 ist ein Lagerbolzen 31 geführt, der eine Lagerachse L definiert, um die eine Aggregatestütze 17 des Antriebsaggregats 1 schwenkbar angelenkt ist. Der Lagerbolzen 31 ist axial beidseitig des Aggregatelagers Q1, Q2, Q3 in einem Konsolenflügel 35, 37 einer Lagerkonsole 39 gelagert, die am Hilfsrahmen 7 angebunden ist.

Die Lagerkonsolen 39 der Aggregatelager Q1, Q2, Q3 sind mit unterschiedlicher Bauteilgeometrie realisiert: So ist das Aggregatelager Q1 gemäß der Figur 2 in einem Inneneckbereich des Hilfsrahmens 7 angeordnet, der zwischen dem vorderen Hilfsrahmenquerträger 11 und dem Hilfsrahmenlängsträger 9 aufgespannt ist. Am Aggregatelager Q1 weist die Lagerkonsole 39 einen als separates Konsolenflügel-Bauteil realisierten Konsolenflügel 35 auf, der am Hilfsrahmenlängsträger 9 angeschweißt ist. Demgegenüber ist der andere Konsolenflügel 37 nicht als ein separates Konsolenflügel-Bauteil realisiert, sondern vielmehr unmittelbarer und einstückiger Bestandteil der inneren Seitenwand 23 des vorderen Hilfsrahmenquerträgers 11. Die beiden Konsolenflügel 35, 37 sind über einen Lager-Zwischenraum 41 voneinander beabstandet, in dem das Aggregatelager Q1 angeordnet ist. An der rahmenäußeren Seitenwand 24 des vorderen Hilfsrahmenquerträgers 11 ist eine Zugangsöffnung 43 ausgebildet, über die das Aggregatelager Q1 montierbar/demontierbar ist. Gemäß der Figur 2 ist der Lagerbolzen 31 durch ein Bolzenloch 45 der inneren Seitenwand 23 des vorderen Hilfsrahmenquerträgers 11 geführt und mit seinem Bolzenkopf 47 am Öffnungsrandbereich des Bolzenloches 45 abgestützt. Am Konsolenflügel 35 ist eine Schweißmutter 49 angeschweißt, mit der die Bolzenspitze des Lagerbolzens 31 verschraubt ist.

In der Figur 3 ist die Lagerkonsole 39 des Aggregatelagers Q2 dargestellt. Demnach sind die beiden Konsolenflügel 35, 37 als separate Konsolenflügel-Blechteile realisiert, die in einer kompakten sowie bauteilsteifen Konsolenflügelgeometrie ausgebildet sind. Jeder der beiden Konsolenflügel 35, 37 ist als ein U-Profilteil ausgebildet, und zwar mit einer Basiswand 51, in der jeweils der (nicht gezeigte) Lagerbolzen 31 durch ein Bolzenloch 52 geführt ist, und mit davon abgewinkelten Stützschenkel 53, die die Basiswand 51 an der inneren Seitenwand 23 des Hilfsrahmens 7 abstützen. Der jeweilige Konsolenflügel 35, 37 ist an seiner Basiswand-Bodenkante 55 und an seiner Stützschenkel-Bodenkante 57 am Hilfsrahmen 7 verschweißt. Wie aus der Figur 3 weiter hervorgeht, ist die Basiswand 51 dreieckförmig ausgebildet. Deren Basiswand-Randkanten 59 laufen ausgehend von der Basiswand-Bodenkante 55 an einem gerundeten Basiswand-Scheitel 61 dreieckförmig zusammen, in deren Bereich das Bolzenloch 52 ausgebildet ist. Der Kantenverlauf der jeweiligen Basiswand-Randkante 59 ist unterteilt in eine Übergangskante 63, an der die Basiswand 51 in die jeweiligen Stützschenkel 53 übergeht, und in eine freie Randkante 65, die sich bis zum Basiswand-Scheitel 61 erstreckt.

In der Figur 3 sind die unteren Stützschenkel 53 der beiden Konsolenflügel 35, 37 jeweils mit einer Blechlasche 67 verlängert, die die Basiswand-Bodenkante 55 mit einem Überstand Δz überragt. Die Basiswand-Bodenkante 55 ist gemäß der Figur 3 an einer inneren Seitenwand 23 des vorderen Hilfsrahmenquerträgers 11 angeschweißt, während die Stützschenkel-Blechlasche 67 die untere Hilfsrahmen-Übergangskante 22 umgreift und an der Bodenwand 21 des vorderen Hilfsrahmenquerträgers 11 angebunden ist.

Wie aus der Figur 3 weiter hervorgeht, sind die beiden Stützschenkel 53 des Konsolenflügels 35, 37 zueinander nicht parallel ausgerichtet, sondern sind diese vielmehr aufeinander zu geneigt. Auf diese Weise ist eine besonders kompakte sowie bauteilsteife Konsolenflügelgeometrie ermöglicht.

In der Figur 4 ist die Anbindung der Aggregatestütze 17 über das dritte Aggregatelager Q3 am hinteren Hilfsrahmenquerträger 13 gezeigt. Demzufolge weist der hintere Hilfsrahmenquerträger 13 eine muldenförmige Montagevertiefung 71 auf, in der die beiden Konsolenflügel 35, 37 angeordnet sind. Die beiden Konsolenflügel 35, 37 weisen in etwa dieselbe Geometrie auf wie die beiden Konsolenflügel 35, 37 des Aggregatelagers Q2.

Die muldenförmige Montagevertiefung 71 ist in der Hohlträgerwandung ausgebildet, ohne den Hohlraum 18 des hinteren Hilfsrahmenquerträgers 13 nach außen zu öffnen. Wie aus der Figur 4 hervorgeht, ist der Konturverlauf der oberen Übergangskante 22 des hinteren Hilfsrahmenquerträgers 13 mittels der muldenförmigen Montagevertiefung 71 unterbrochen. Dabei geht ein Muldenboden 69 der Montagevertiefung 71 an einem Muldenrand 73 in die innere Seitenwand 23 sowie in die obere Deckwand 19 des hinteren Hilfsrahmenquerträgers 13 über. Zudem sind die beiden Stützschenkel 53 des Konsolenflügels 35, 37 jeweils mit einer Stützschenkel-Blechlasche 67 verlängert, die den Muldenrand 73 übergreift und jeweils an der inneren Seitenwand 23 und der Deckwand 19 des hinteren Hilfsrahmenquerträgers 13 angebunden ist. Demgegenüber ist die Basiswand-Bodenkante 55 des Konsolenflügels 35, 37 am Muldenboden 69 verschweißt.

### BEZUGSZEICHENLISTE:

- 1: Antriebsaggregat
- 7: Hilfsrahmen
- 9: Hilfsrahmenlängsträger
- 11, 13: vordere und hintere Hilfsrahmenquerträger
- 14: Lageraugen
- 15: Anbindungsstellen
- 17: Aggregatestütze
- 18: Hohlraum
- 19: Deckwand
- 21: Bodenwand
- 22: Übergangskante
- 23: innere Seitenwand
- 24: äußere Seitenwand
- 25: Außenhülse
- 27: Lagerkern
- 29: Elastomerkörper
- 31: Lagerbolzen
- 35: Konsolenflügel
- 37: Konsolenflügel
- 39: Lagerkonsole
- 41: Lager-Zwischenraum
- 43: Zugangsöffnung
- 45: Bolzenloch
- 47: Bolzenkopf
- 49: Schweißmutter
- 51: Basiswand
- 52: Bolzenloch
- 53: Stützschenkel
- 55: Basiswand-Bodenkante
- 57: Stützschenkel-Bodenkante
- 59: Basiswand-Randkante
- 61: Basiswand-Scheitel
- 63: Übergangskante
- 65: freie Randkante
- 67: Stützschenkel-Lasche
- 69: Muldenboden
- 71: Montagevertiefung
- 73: Muldenrand
- Q1, Q2, Q3: Aggregatelager
- L: Lagerachse
- Δz: Überstand

## Patentansprüche

1. Hilfsrahmen für ein Fahrzeug, mit einer Aggregatelagerung, bei der eine Aggregatestütze (17) an einem Aggregatelager (Q1) am Hilfsrahmen (7) um eine Lagerachse (L) schwenkbar angelenkt ist, wobei das Aggregatelager (Q1) axial beidseitig an jeweils einem Konsolenflügel (35, 37) einer Lagerkonsole (39) des Hilfsrahmens (7) befestigt ist, wobei das Aggregatelager (Q1) in einem Inneneckbereich des Hilfsrahmens (7) angeordnet ist, an dem ein erster Hilfsrahmenträger (11) und ein zweiter Hilfsrahmenträger (9) zusammenlaufen, wobei einer der Konsolenflügel (37) unmittelbar durch eine Wandung des ersten Hilfsrahmenträgers (11) ausgebildet ist, wobei der erste Hilfsrahmenträger (11) ein Hohlträger ist, der einen Hohlraum (18) begrenzt, der im Hohlträgerquerschnitt mittels einer Hohlträgerwandung geschlossen ist, **dadurch gekennzeichnet, dass** der erste Hilfsrahmenträger (11) an seiner rahmenäußeren Seite (24) eine Zugangsöffnung (43) aufweist, über die das Aggregatelager (Q1) montierbar/demontierbar ist.

2. Hilfsrahmen nach Anspruch 1, **dadurch gekennzeichnet, dass** der andere Konsolenflügel (35) als ein separates Konsolenflügel-Bauteil ausgebildet ist, das am zweiten Hilfsrahmenträger (9) angebunden ist, und dass das Konsolenflügel-Bauteil (35) über einen Lager-Zwischenraum (41) vom ersten Hilfsrahmenträger (11) beabstandet ist, in dem das Aggregatelager (Q1) angeordnet ist, und dass der erste Hilfsrahmenträger (11) ein Hilfsrahmenquerträger ist, und der zweite Hilfsrahmenträger (9) ein Hilfsrahmenlängsträger ist.

3. Hilfsrahmen für ein Fahrzeug, mit einer Aggregatelagerung, bei der eine Aggregatestütze (17) an einem Aggregatelager (Q2) am Hilfsrahmen (7) um eine Lagerachse (L) schwenkbar angelenkt ist, die von einem Lagerbolzen (31) definiert ist, der axial beidseitig des Aggregatelagers (Q2) in einem Konsolenflügel (35, 37) einer Lagerkonsole (39) des Hilfsrahmens (7) gelagert ist, wobei zumindest einer der Konsolenflügel (35, 37) als ein U-Profilteil ausgebildet ist mit einer Basiswand (51), in der der Lagerbolzen (31) gelagert ist, und mit davon abgewinkelten Stützschenkeln (53), die die Basiswand (51) gegenüber dem Hilfsrahmen (7) abstützen, **dadurch gekennzeichnet, dass** der Konsolenflügel (35, 37) an seiner Basiswand-Bodenkante (55) und an seiner Stützschenkel-Bodenkante (57) am Hilfsrahmen (7) verschweißt ist, und dass die Basiswand (51) dreieckförmig ausgebildet ist, und zwar mit Basiswand-Randkanten (59), die an einem bevorzugt gerundeten Basiswand-Scheitel (61) dreieckförmig zusammenlaufen, in dessen Bereich eine Lageröffnung (52) für den Lagerbolzen (31) ausgebildet ist.

4. Hilfsrahmen nach Anspruch 3, **dadurch gekennzeichnet, dass** zumindest einer der Stützschenkel (53) mit einer Lasche (67) verlängert ist, die die Basiswand-Bodenkante (55) mit einem Überstand (Δz) überragt, und dass die Basiswand-Bodenkante (55) an einer Rahmeninnenseite (23) des Hilfsrahmens (7) angebunden ist und die Stützschenkel-Lasche (67) an einer Rahmenoberseite (19) oder Rahmenunterseite (21) angebunden ist.

5. Hilfsrahmen nach einem der Ansprüche 3 oder 4, **dadurch gekennzeichnet, dass** die beiden Stützschenkel (53) zueinander nicht parallel, sondern in Richtung Basiswand-Scheitel (61) aufeinander zu geneigt sind, wodurch sich eine kompakte sowie bauteilsteife Konsolenflügelgeometrie ergibt, und/oder dass der Konsolenflügel (35, 37) ein Blech-Umformteil ist.

6. Hilfsrahmen, mit einer Aggregatelagerung, bei der eine Aggregatestütze (17) an einem Aggregatelager (Q3) am Hilfsrahmen (7) um eine Lagerachse (L) schwenkbar angelenkt ist, die von einem Lagerbolzen (31) definiert ist, der axial beidseitig des Aggregatelagers (Q3) in einem Konsolenflügel (35, 37) einer Lagerkonsole (39) des Hilfsrahmens (7) gelagert ist, wobei ein Hilfsrahmenträger (9, 11, 13), das heißt ein Hilfsrahmenquerträger oder ein Hilfsrahmenlängsträger, unter Querschnittsreduzierung des Hilfsrahmenträgers (9, 11, 13) mit einer muldenförmigen Montagevertiefung (71) ausgebildet ist, in der die Konsolenflügel (35, 37) angeordnet sind, wobei der Hilfsrahmenträger (9, 11, 13) ein Hohlträger ist, der einen Hohlraum begrenzt, der im Hohlträgerquerschnitt mittels einer Hohlträgerwandung geschlossen ist, in der die muldenförmige Montagevertiefung (71) ausgebildet ist, und wobei die Hohlträgerwandung einen rechteckförmigen Querschnitt aufweist, bei dem eine obere horizontale Hohlträger-Deckwand (19) und eine untere horizontale Hohlträger-Bodenwand (21) an Übergangskanten (22) mit vertikalen Hohlträger-Seitenwänden (23, 24) verbunden sind, **dadurch gekennzeichnet, dass** der Konturverlauf einer der Übergangskanten (22) mit der muldenförmigen Montage-Vertiefung (71) unterbrochen ist, und dass ein Muldenboden (69) der Montage-Vertiefung (71) an einem Vertiefungsrand (37) in die Seitenwand (23, 24) und in die Boden- oder Deckenwand (19, 21) des Hilfsrahmenträgers (7) übergeht.

## Claims

1. Subframe for a vehicle, having an assembly bearing arrangement in which an assembly support (17) is articulated on an assembly bearing (Q1) on the subframe (7) so as to be pivotable about a bearing axis (L), wherein the assembly bearing (Q1) is fastened axially on both sides to in each case one bracket wing (35, 37) of a bearing bracket (39) of the subframe (7), wherein the assembly bearing (Q1) is arranged in an inner corner region of the subframe (7) at which a first subframe member (11) and a second subframe member (9) converge, wherein one of the bracket wings (37) is formed directly by a wall of the first subframe member (11), wherein the first subframe member (11) is a hollow member which delimits a cavity (18) which, in a hollow-member cross section, is closed by means of a hollow-member wall,
**characterized in that**
the first subframe member (11) has on its frame-based outer side (24) an access opening (43) via which the assembly bearing (Q1) is able to be mounted/dismounted.

2. Subframe according to Claim 1, **characterized in that** the other bracket wing (35) is formed as a separate bracket-wing component which is attached to the second subframe member (9), and **in that** the bracket-wing component (35) is spaced apart from the first subframe member (11) via a bearing intermediate space (41) in which the assembly bearing (Q1) is arranged, and **in that** the first subframe member (11) is a subframe crossmember, and the second subframe member (9) is a subframe longitudinal member.

3. Subframe for a vehicle, having an assembly bearing arrangement in which an assembly support (17) is articulated on an assembly bearing (Q2) on the subframe (7) so as to be pivotable about a bearing axis (L), said bearing axis being defined by a bearing bolt (31) which, axially on both sides of the assembly bearing (Q2), is mounted in a bracket wing (35, 37) of a bearing bracket (39) of the subframe (7), wherein at least one of the bracket wings (35, 37) is formed as a U-shaped profile part with a base wall (51), in which the bearing bolt (31) is mounted, and with supporting legs (53) angled away therefrom, which support the base wall (51) with respect to the subframe (7), **characterized in that** the bracket wing (35, 37) is welded at its base-wall bottom edge (55) and at its supporting-leg bottom edge (57) to the subframe (7), and **in that** the base wall (51) is of triangular form, specifically with base-wall peripheral edges (59) which converge with a triangular shape at a preferably rounded base-wall apex (61), in the region of which a bearing opening (52) for the bearing bolt (31) is formed.

4. Subframe according to Claim 3, **characterized in that** at least one of the supporting legs (53) is extended by a tab (67) which projects beyond the base-wall bottom edge (55) with a projection (Δz), and **in that** the base-wall bottom edge (55) is attached to a frame inner side (23) of the subframe (7) and the supporting-leg tab (67) is attached to a frame top side (19) or frame bottom side (21).

5. Subframe according to either of Claims 3 and 4, **characterized in that** the two supporting legs (53) are not parallel to one another, but inclined towards one another in the direction of the base-wall apex (61), which results in a compact and component-rigid bracket-wing geometry, and/or **in that** the bracket wing (35, 37) is a formed sheet-metal part.

6. Subframe having an assembly bearing arrangement in which an assembly support (17) is articulated on an assembly bearing (Q3) on the subframe (7) so as to be pivotable about a bearing axis (L), said bearing axis being defined by a bearing bolt (31) which, axially on both sides of the assembly bearing (Q3), is mounted in a bracket wing (35, 37) of a bearing bracket (39) of the subframe (7), wherein a subframe member (9, 11, 13), that is to say a subframe crossmember or a subframe longitudinal member, is formed with a trough-shaped mounting depression (71), with cross-sectional reduction of the subframe member (9, 11, 13), in which mounting depression the bracket wings (35, 37) are arranged, wherein the subframe member (9, 11, 13) is a hollow member which delimits a cavity which, in a hollow-member cross section, is closed by means of a hollow-member wall in which the trough-shaped mounting depression (71) is formed, and wherein the hollow-member wall has a rectangular cross section in which an upper horizontal hollow-member top wall (19) and a lower horizontal hollow-member bottom wall (21) are connected at transition edges (22) to vertical hollow-member side walls (23, 24), **characterized in that** the contour profile of one of the transition edges (22) is interrupted by the trough-shaped mounting depression (71), and **in that** a trough bottom (69) of the mounting depression (71) transitions at a depression periphery (37) into the side wall (23, 24) and into the bottom wall or top wall (19, 21) of the subframe member (7).

## Revendications

1. Cadre auxiliaire pour un véhicule, avec un système de montage d'unité, dans lequel un appui d'unité (17) est articulé sur un palier d'unité (Q1) sur le cadre auxiliaire (7) de manière à pouvoir pivoter autour d'un axe de palier (L), le palier d'unité (Q1) étant fixé axialement des deux côtés respectivement à une aile de console (35, 37) d'une console de palier (39) du cadre auxiliaire (7), le palier d'unité (Q1) étant agencé dans une zone d'angle intérieur du cadre auxiliaire (7), au niveau de laquelle un premier support de cadre auxiliaire (11) et un deuxième support de cadre auxiliaire (9) se rejoignent, l'une des ailes de console (37) étant réalisée directement par une paroi du premier support de cadre auxiliaire (11), le premier support de cadre auxiliaire (11) étant un support creux qui délimite un espace creux (18) qui est fermé dans la section transversale de support creux au moyen d'une paroi de support creux, **caractérisé en ce que** le premier support de cadre auxiliaire (11) présente sur son côté extérieur de cadre (24) une ouverture d'accès (43) par l'intermédiaire de laquelle le palier d'unité (Q1) peut être monté/démonté.

2. Cadre auxiliaire selon la revendication 1, **caractérisé en ce que** l'autre aile de console (35) est réalisée sous la forme d'un composant d'aile de console séparé qui est attaché au deuxième support de cadre auxiliaire (9), et **en ce que** le composant d'aile de console (35) est espacé du premier support de cadre auxiliaire (11) par l'intermédiaire d'un espace intermédiaire de palier (41) dans lequel est agencé le palier d'unité (Q1), et **en ce que** le premier support de cadre auxiliaire (11) est un support transversal de cadre auxiliaire, et le deuxième support de cadre auxiliaire (9) est un support longitudinal de cadre auxiliaire.

3. Cadre auxiliaire pour un véhicule, avec un système de montage d'unité, dans lequel un appui d'unité (17) est articulé sur un palier d'unité (Q2) sur le cadre auxiliaire (7) de manière à pouvoir pivoter autour d'un axe de palier (L), qui est défini par un boulon de palier (31), qui est monté axialement des deux côtés du palier d'unité (Q2) dans une aile de console (35, 37) d'une console de palier (39) du cadre auxiliaire (7), au moins l'une des ailes de console (35, 37) étant réalisée sous la forme d'une pièce profilée en U avec une paroi de base (51) dans laquelle est monté le boulon de palier (31), et avec des branches d'appui (53) coudées à partir de celle-ci, qui soutiennent la paroi de base (51) par rapport au cadre auxiliaire (7), **caractérisé en ce que** l'aile de console (35, 37) est soudée au cadre auxiliaire (7) au niveau de son arête de fond de paroi de base (55) et au niveau de son arête de fond de branche d'appui (57), et **en ce que** la paroi de base (51) est réalisée en forme de triangle, et ce avec des arêtes de bord de paroi de base (59) qui se rejoignent en forme de triangle au niveau d'un sommet de paroi de base (61) de préférence arrondi, dans la zone duquel est réalisée une ouverture de palier (52) pour le boulon de palier (31).

4. Cadre auxiliaire selon la revendication 3, **caractérisé en ce qu'**au moins l'une des branches d'appui (53) est prolongée par une patte (67) qui dépasse l'arête de fond de la paroi de base (55) avec une saillie (Δz), et **en ce que** l'arête de fond de paroi de base (55) est attachée à un côté intérieur de cadre (23) du cadre auxiliaire (7) et la patte de branche d'appui (67) est attachée à un côté supérieur de cadre (19) ou à un côté inférieur de cadre (21).

5. Cadre auxiliaire selon l'une quelconque des revendications 3 ou **4, caractérisé en ce que** les deux branches d'appui (53) ne sont pas parallèles l'une à l'autre, mais inclinées l'une vers l'autre en direction du sommet de paroi de base (61), ce qui donne une géométrie d'aile de console compacte ainsi que rigide au niveau des composants, et/ou **en ce que** l'aile de console (35, 37) est une pièce de formage en tôle.

6. Cadre auxiliaire, avec un système de montage d'unité, dans lequel un appui d'unité (17) est articulé sur un palier d'unité (Q3) sur le cadre auxiliaire (7) de manière à pouvoir pivoter autour d'un axe de palier (L) qui est défini par un boulon de palier (31) qui est monté axialement des deux côtés du palier d'unité (Q3) dans une aile de console (35, 37) d'une console de palier (39) du cadre auxiliaire (7), un support de cadre auxiliaire (9, 11, 13), c'est-à-dire un support transversal de cadre auxiliaire ou un support longitudinal de cadre auxiliaire, étant réalisé avec une réduction de la section transversale du support de cadre auxiliaire (9, 11, 13) avec un creux de montage (71) en forme d'auge, dans lequel sont agencées les ailes de console (35, 37), le support de cadre auxiliaire (9, 11, 13) étant un support creux qui délimite un espace creux, qui est fermé dans la section transversale de support creux au moyen d'une paroi de support creux dans laquelle est réalisée le creux de montage (71) en forme d'auge, et la paroi de support creux présentant une section transversale rectangulaire dans laquelle une paroi de dessus horizontale supérieure de support creux (19) et une paroi de fond horizontale inférieure de support creux (21) sont reliées, au niveau d'arêtes de transition (22), à des parois latérales verticales de support creux (23, 24), **caractérisé en ce que** le tracé de contour de l'une des arêtes de transition (22) est interrompu par le creux de montage (71) en forme d'auge, et **en ce qu'**un fond d'auge (69) du creux de montage (71) se prolonge, au niveau d'un bord de creux (37), dans la paroi latérale (23, 24) et dans la paroi de fond ou de dessus (19, 21) du support de cadre auxiliaire (7).
